(19) Europäisches Patentamt
European Patent Office
Office européen des brevets

(11) **EP 4 462 203 A1**

(12) **EUROPEAN PATENT APPLICATION**

(43) Date of publication:
**13.11.2024 Bulletin 2024/46**

(21) Application number: **23173091.2**

(22) Date of filing: **12.05.2023**

(51) International Patent Classification (IPC):
***G05B 19/4065*** *(2006.01)*

(52) Cooperative Patent Classification (CPC):
**G05B 19/4065;** G05B 2219/37226;
G05B 2219/37348; G05B 2219/37391;
G05B 2219/37525; G05B 2219/45035;
G05B 2219/50186; G05B 2219/50197;
G05B 2219/50328

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Siemens Aktiengesellschaft 80333 München (DE)**

(72) Inventor: **Leveque, Louis 1070 Wien (AT)**

(74) Representative: **Siemens Patent Attorneys Postfach 22 16 34 80506 München (DE)**

(54) **ANOMALY DETECTION FOR A CUTTING MACHINE WITH AN ELECTRICALLY DRIVEN SPINDLE**

(57) Present invention concerns a method (200) for anomaly detection in a cutting machine (105) with a spindle (115) which is driven by an electric motor (120). The proposed method (200) comprises steps of determining (215) an electric power consumption of the motor (120) during a working cycle (305) of the machine (105); dividing the working cycle into time windows (335) ; for each time window (335), determining (225) wether the spindle (115) was cutting and/or idling on the basis of associated electric power values; determining (245) median and expected deviation of electric power values for cutting and idling operation over the sequence of time windows (335) ; and determining (250) an anomaly if electric power values during cutting or idling exceed a predetermined relationship to the corresponding median and expected deviation values.

FIG 4

**Description**

Present invention concerns a cutting machine with an electrically driven spindle. More specifically, present invention concerns determination of an anomaly of the spindle.

A cutting machine is adapted to cut sheet material into smaller pieces. Cutting may be done with a circular saw or a milling cutter. The cutting element may also be called spindle as it rotates in high speed around a predetermined axis. The spindle is driven by an electric motor which can be controlled to a predetermined rotating speed.

During cutting the spindle undergoes a certain wear and tear so that its life time may be limited. After some time, the spindle may bend or break so that it cannot be used any further for cutting. The spindle may be an expendable part and a new spindle may be inserted to the cutting machine. However, replacing the spindle may take some time. The cutting machine may participate in an integrated production process that may have to be halted for changing the spindle.

Several methods have been proposed to estimate whether or not a spindle in a cutting machine needs replacement. Some known methods make use of machine learning techniques. Based on operational data of the spindle a pattern that is observable during normal operation may be learned. Deviations from that pattern may be considered indicative of an anomaly and a warning may be raised. However, such models mostly require information that may not be available, for instance whether the spindle is cutting or rotating idly at a given time.

It is an object of present invention to provide an improved technique for determining anomaly in a cutting machine with an electrically driven spindle. The invention solves the given problem by means of subject matter defined in enclosed independent claims. Dependent claims describe preferred embodiments.

A proposed method concerns anomaly detection in a cutting machine with a spindle which is driven by an electric motor. The method comprises steps of determining an electric power consumption of the motor during a working cycle of the machine; dividing the working cycle into time windows; for each time window, determining wether the spindle was cutting and/or idling on the basis of associated electric power values; determining median and expected deviation of electric power values for cutting and idling operation over the sequence of time windows; and determining an anomaly if electric power values during cutting or idling exceed a predetermined relationship to the corresponding median and expected deviation values.

To get the expected deviation, the interquartile range of the measurements may be adjusted such that it corresponds to the standard deviation for a normal distribution. For this, it may simply be multiplied by a factor of $1/(2*0.6745)$.

Anomaly detection may be carried out on minimum data drawn from the cutting machine. The method may especially be carried out without knowledge whether the spindle is cutting at a given time or just rotating idly. This differentiation may be made by said method so that anomaly may be detected with improved precision. The anomaly may be indicative of an impending spindle failure. An operational status of the spindle may thus be determined with improved precision.

The cutting machine may operate after a pattern in which there are times when the spindle is cutting and other times when the spindle is just rotating and not cutting, which is herein referred to as idling or rotating idly. The pattern may be predetermined or programmed and it may not be known and not required as a parameter for the proposed method.

In one embodiment the cutting machine may comprise a depaneling machine for PCBs. The machine may be adapted to cut sheet material into smaller pieces. Various interlaced processing steps may be carried out on the PCB so that occasionally the spindle will be kept rotating without cutting until another step has finished.

It is especially preferred that the determination whether the spindle was cutting or idling during a time window is carried out using a first Gaussian Mixture Model. The Gaussian Mixture Model (GMM) may be used to determine whether within a present time window the spindle was cutting the whole time, idling the whole time or cutting during a part of the window and idling during another. The GMM may also be used for determining statistically relevant figures for telling measurements which relate to a cutting and those that relate to idling apart.

It is especially preferred that a rotating speed of the spindle is determined along with the electric power values. Median and expected deviation of electric power values may then be determined for matching rotating speeds.

This may help considering that wear on the spindle may be related to the rotating speed of the spindle. Also, electric power values may correlate to the rotating speed. The higher the speed, the higher the power required to run the spindle may be. Behaviour of the spindle at different speeds may thus vary. The rotating speed, as well as the electric power consumption of the electric motor may be picked up from a controller of the cutting machine.

It is especially preferred that different rotating speeds of the spindle are determined using a second Gaussian Mixture Model. The second GMM may determine how many and which different speeds were used during the working cycle. On this basis it may be determined which of the time windows relate to which determined rotating speeds.

Electric power values of different time windows may be collected in a histogram and the median and expected deviation of electric power values are then determined on the basis of the histogram. One histogram may be related to rotating speeds of the spindle and entries from all time windows in which a matching rotating speed of the spindle was used may be collected. The histogram will typically show two accumulations that relate to an electric power consumption during cutting and during idling. However, the GMM and the median and expected deviation (or inter-quartile distance) may also be determined from the measurements directly.

Anomaly determination may consider relative frequencies of cutting and idling times of the spindle. For example, should there be a large number of entries for cutting operation and a small one for idling operation in one time window, determination of an anomaly may be based on relative weights of the cutting and idling entries. An anomaly value may fulfil a predetermined relationship between an observed deviation of data points from the determined median and a deviation that is to be expected on the basis of the weighing.

On the basis of occurrences of anomalies of the spindle an impending spindle failure may be determined. Furthermore, a remaining spindle life time may be determined on the basis of observed anomalies. Maintenance of the cutting machine, especially for replacing the spindle, may thus be planned in advance with improved precision. The cutting machine may be kept operational over a longer time and maintenance downtimes may be advantageously scheduled. Quality of a type of spindle may be determined on the basis of observed or estimated lifetimes.

It is generally preferred that the time windows are of at least similar length. A typical time window may have a length of about 30 seconds to two minutes. A working cycle of the machine may take as long as half an hour, one hour or even longer. More precisely, during the fitting phase, when the first GMM is applied, the median length of several working cycles may be computed. A time window length range may then be determined accordingly. Exemplary default length range may comprise 10 to 30 secs, 20 to 50 secs and 30 to 120 secs. It is also possible to configure this range manually. If a spindle runs usually 10 min cycles, intervals of 30 to to 120 secs may be chosen, if it runs usually 15 secs cycles, intervals of 10 to 30 secs may be more appropriate.

In another refinement of present method, portions of the working cycle in which the spindle is accelerated from a standstill or decelerated to a standstill may be excluded from determining the time windows. During such times, a relationship between electric power consumption of the electric motor and rotating speed of the spindle may be different from relationships that may be observed during normal operation.

During these ramp-up or ramp-down times, respectively, monotone large increases or decreases of the speed may be observed. After excluding these times, we can assume that the speed on each time window is more or less constant. The second Gaussian Model may then allow to determine the main speed in the time window. The assumption that the speed is relatively constant holds usually very well because the spindle is programmed to run at a specific speed.

According to another aspect of present invention, a computer program product comprises instructions which may cause an electronic device and/or an electronic control system to perform a method that is described herein. To this end, the computer program product may be executed on the electronic device and/or the electronic control system.

According to yet another aspect of present invention a computer readable media is provided on which a computer program product as described herein is stored.

According to yet one more aspect of present invention a monitoring device for a cutting machine with a spindle which is driven by an electric motor is provided. In this, the monitoring device comprises a first interface to the cutting machine for determining electric power consumption of the motor; a second interface for outputting an indication; and processing means. The processing means are adapted to determine electric power consumption of the motor during a working cycle of the machine; to divide the working cycle into time windows; to determine, for each time window, whether the spindle was cutting and/or idling on the basis of associated electric power values; to determine median and expected deviation of electric power values for cutting and idling operation over the sequence of time windows; and to determine an anomaly if electric power values during cutting or idling exceed a predetermined relationship to the corresponding median and expected deviation values.

The device may be adapted to carry out a method as described herein completely or in part. The processing means may comprise electronic execution means like a computer system. The execution means may also comprise a programmable microcomputer, a microcontroller or an integrated circuit. Features or advantages of the methods may applicable to the device and vice versa.

The indication may herald an impending spindle failure. The indication may be given to a person who is associated to operating the cutting machine. The indication may also be given in electronic form and further evaluated by the monitoring device or a different device. Evaluation may especially comprise determination of an operational status of the spindle or estimating a remaining lifetime.

It is furthermore preferred that the cutting machine comprises a depaneling machine. The depaneling machine may be adapted to cut PCB sheets into smaller portions. The cutting machine may part of an integrated production system for PCBs.

Brief Summary of the Enclosed Figures

The above-described properties, features and advantages of present invention as well as the way they are achieved will be made clearer and better understandable in the light of the following discussion, making reference to exemplary embodiments shown in accompanying figures, in which

Figure 1    shows a system;
Figure 2    shows a flowchart of an exemplary method;
Figure 3    shows exemplary electric power and speed data for a spindle during a working cycle;
Figure 4    shows second processing steps.

Detailed Exemplary Embodiments of the Invention

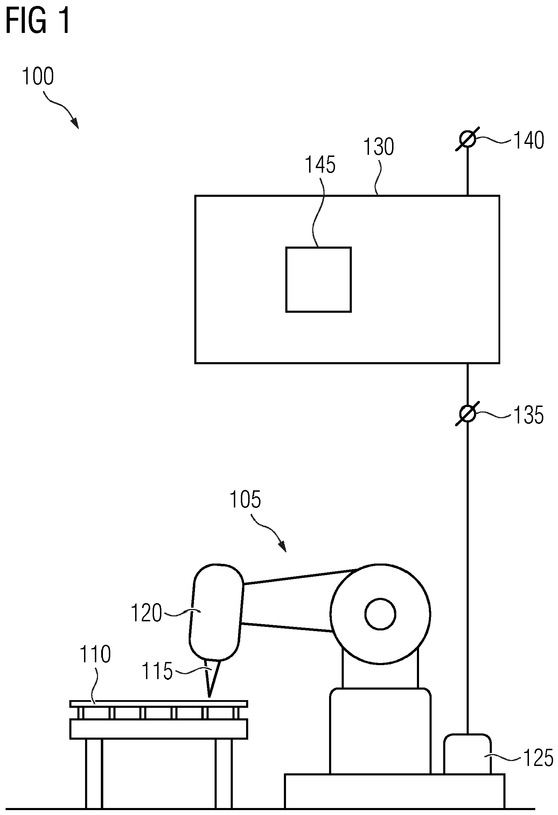

Figure 1 shows a system 100 comprising a cutting machine 105 with a spindle 115 which is driven by an electric motor 120, a controller 125 and a monitoring device 130. The cutting machine 105 is adapted to cut a larger PCB (printed circuit board) 110 into smaller sections. The cutting machine 105 may be part of a production facility for PCBs 110. Cutting may be done before or after electric or electronic components have been placed and soldered to the PCB material 110.

PCB material 110 usually takes the form of a laminated sandwich structure of conductive and insulating layers. A conductive layer may comprise copper and an insulating layer may comprise phenolic cotton paper or glass and epoxy. A PCB production line may furthermore comprise machines for optical coating, exposing, developing, etching, washing, stacking, riveting or laminating.

The controller 125 is adapted to control a rotating speed of the spindle 115 and may also control horizontal and/or vertical movement of the spindle 115 with respect to the PCB sheet material 110. For a cutting task the machine 105 may be put led through a predetermined motion or motion pattern against the PCB 110.

Cutting one PCB board 110 into a number of smaller pieces requires a sequence of motions that may be comprised by a working cycle. Between working cycles, while already cut pieces of PCB 110 may be removed from a working area and a new PCB 110 sheet may be prepared, the spindle 115 may be braked to a standstill and possibly be moved to a parking position. Before cutting of the next sheet takes place, the spindle 115 may be accelerated to an operation rotating speed.

The controller 125 is adapted to provide a first signal that is indicative of electric power consumed by the motor 120, preferably of an electric current that flows through the motor 120. A voltage to the motor 120 may be kept constant or there may be provided a signal indicative of the voltage so that the consumed electric power may be determined as a product of the voltage and the current. The controller 125 may also provide a second signal that is indicative of a rotating speed of the spindle 115.

During operation of the cutting machine 105 the spindle 125 undergoes a certain wear-out. At some point the spindle 125 may thus show degraded performance or even get deformed or fragmented so that it can no longer be used for cutting. If the spindle 125 actually breaks during operation the PCB 110 or the cutting machine 105 may be damaged. Replacing the spindle 125 or repairing the cutting machine 105 may take some time during which the cutting machine 105 and possibly other machines of a production line may have to be stopped. Such a machine may require a complex, costly or time consuming deactivation / reactivation process.

It is therefore desirable to have an estimation for a health status of the spindle 125 so that replacing the spindle 125 can be prepared or be scheduled preemptively. The health status may be determined on the basis of a type of spindle 125 used and a measure for the physical stress it has been exposed to so far.

The monitoring device 130 is adapted to guard operation of the spindle 115 and generate a signal should an anomaly of the spindle 125 be detected. To this end, the device 130 analyses information made available by the controller 125. It is assumed that the controller 125 does not provide a signal that is indicative of whether the spindle 115 is currently cutting or idling.

The monitoring device 130 comprises a first interface 135, a second interface 140 and processing means 145. The processing means 145 may comprise electronic circuitry and preferably a programmable microcomputer or microcontroller.

The first interface 130 may be connected to the controller 125 in order to pick up at least a first signal indicative of the electric power used for rotating the spindle 125 and preferably also a second signal indicative of a rotating speed of the spindle 115. The second interface 140 may be connected to a human interface like an optic, acoustic or haptic output device. The second interface 140 may also be connected to another system for processing the anomaly signal. Processing may especially comprise determining a health or operational status or estimating a remaining lifetime of the spindle 115.

The processing means 145 are adapted to determine an anomaly based on the information provided by the controller 125. To this end, it may determine wether the spindle 115 is cutting or idling at a given time or during a given time period. Average electric power consumptions for cutting and idling may be determined and a current electric power consumption may be compared to the average electric power consumption. An anomaly may be determined on the basis of a predetermined relationship between those values and possibly one or more other values.

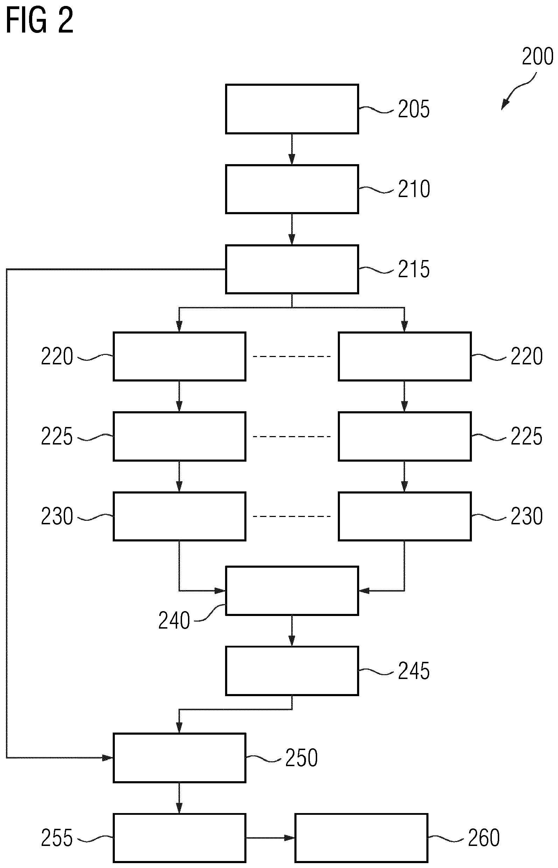

Figure 2 shows a flowchart of an exemplary method 200 for detecting an anomaly of a spindle 125 in a cutting machine 105.

In a step 205, a current rotating speed of the spindle 125 may be determined. This may be done on the basis of a signal from the controller 125. A useful unit for the rotating speed is revolutions per minute (RPM). Should the spindle 125 run at a fixed speed, step 205 may be omitted and the fixed speed may be taken as a basis for following steps. An electric power consumed by the motor 120 may be also determined in step 205. An electric current flowing through the motor 120 may be used as an indication for the electric power. The motor 120 may be a DC, AC or multi phase motor and various control schemes may be applied to control its rotating speed.

In a step 210, times in which rotating speed of the spindle 120 is ramped up from a standstill to an operating speed or vice versa may be skipped. In one embodiment times in which the rotating speed reported by the controller 125 lies under a predetermined limit may be skipped. In another embodiment fixed times after turning the motor 120 on or before turning the motor 120 off may be skipped. It is assumed that one working cycle of the cutting machine 105 is framed by such acceleration and deceleration times.

In a step 215 rotating speed of the spindle 120 and electric power consumed by the motor 120 may be collected over a present working cycle. Rotating speed of the spindle 115 may be controlled to different values during a working cycle. Therefore speed and electric power measurements are collected in a sequence of time windows that typically have the same length. Ensuing steps 220 to 230 may be executed once for each time window. One time window may cover for example 30s to 2 min while the working cycle may take as long as 45 minutes or more.

In a step 220 speed and electric power data in the window in question is collected. This may yield a series of two dimensional data points for the time window wherein each data point represents a rotating speed and an associated electric power value.

While the spindle 115 is cutting through PCB material 110, the motor 120 consumes more electric power and the consumed electric power varies more than when the spindle is turning at a comparable speed without cutting. A relationship between rotating speed and drawn electric power may thus hint at the operation of the spindle 120 at a given time. However, the consumed electric power may also be dependent on the rotating speed as the motor 120 may consume more electric power at higher speeds. An anomaly to the spindle 115 may be accompanied by an increased or varying electric power consumption of the motor 120.

In a step 225 a first Gaussian Mixture Model GMM1 may be applied to separate data points which represent cutting from data points which represent idling. Electric power values of each data point may be entered into a first histogram and rotating speed values into a second histogram.

In a step 230 the first GMM may determine a fit over the values of each histogram. A median and an expected deviation for the rotating speed as well as the electric power during cutting and idling may be provided. Steps 220 through 230 may be repeated once for each time window. However, histogram processing is optional and used herein to better explain the process. A direct determination may be used instead.

In a step 240 a second Gaussian Mixture Model GMM2 may be applied to data from all time windows to determine which different rotating speeds were used during the working cycle. For time windows with matching rotating speeds a median and an expected deviation of electric power values may then be determined for both cutting and idling operation.

In a step 250 an anomaly during the working cycle may be determined if electric power values in any one of the time windows exceed a predetermined threshold value. This threshold value may be determined as a quotient between an observed deviation from the associated median and the expected deviation from the fitting.

Optionally a remaining lifetime of the spindle 115 may be determined in a step 255 on the basis of detected anomalies, estimated cutting stress and/or data on the type of spindle 115 used.

In a step 260 a signal that is indicative of a detected anomaly to the spindle 115 and/or an impending end of the lifetime of the spindle 115 may be issued. The signal may be used to schedule replacement of the spindle 115. In another embodiment it may be determined what stress spindles 115 of a given type may be exposed to before a probability of failure exceeds a predetermined value.

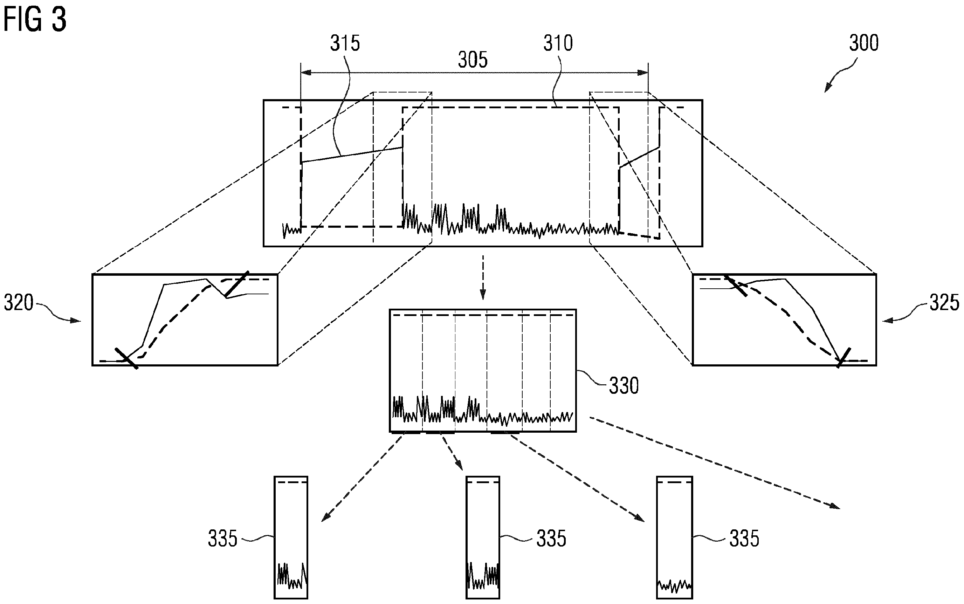

Figure 3 shows exemplary electric power and speed data 300 for a spindle 115 during a working cycle 305. The horizontal direction reflects time and the vertical direction rotating speed and electric power, respectively. A first series 310 shows speed and a second series 315 electric power values.

At the beginning of a working cycle 305 rotating speed of the spindle 115 is ramped up from zero to a working speed. This process is shown magnified as detail 320. Similarly, ramping down the spindle speed from a working speed to zero at the end of a working cycle 305 is shown in detail 325. In both cases a relationship between the rotating speed and consumed electric power does not follow the same relationship during cutting or idling of the spindle 115. Therefore electric power and speed data from the phases shown in details 320 and 325 may be dropped. After this a time section 330 remains which may then be subdivided into time windows 335 of equal duration.

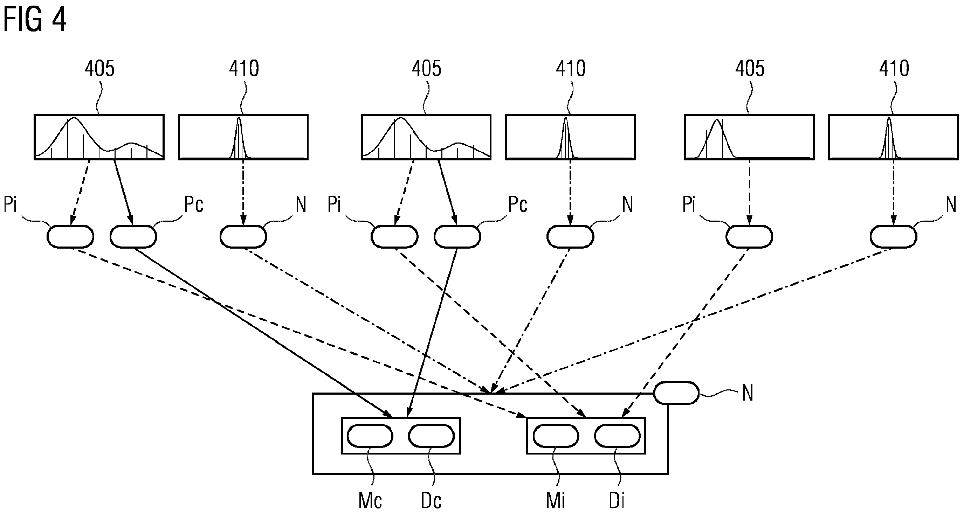

Figure 4 shows exemplary data derived from time windows 335 as in figure 3. For each time window 335 electric power data may be collected in a first histogram 405 and speed data may be collected in a second histogram 410. The first Gaussian Mixture Model GMM1 may be used to create a fit to a histogram data and determine medians as well as expected deviations.

The second Gaussian Mixture Model GMM2 may be applied to the available speed data in order to build groups of time windows with matching speeds. Electric power information that relates to matching rotating speeds may thus be aggregated. By connecting fitting data with GMM parameters, a median and an expected deviation may be determined for the rotating speed during cutting and during idling, respectively. These parameters may be determined for each of the rotating speeds encountered during the working cycle 305. An anomaly to the spindle 115 may be determined on the basis of the calculated parameters.

Considering an exemplary time window 335 in which the spindle 115 was idling the whole time, an anomaly may be determined if a deviation of the observed electric power from the determined median of the electric power during idling exceeds the expected power deviation multiplied by some configurable threshold. One possible default threshold is 20, so an anomaly may be determined if an actual deviation is 20 times larger than the expected deviation.

However, a time window 335 may comprise sections in which the spindle 115 was cutting and others in which it was idling. In order to correctly determine an anomaly, a relative idle time may be considered when processing an electric power value. An anomaly may be detected if

$$(I * (Mi - Pi) + (1 - I) * (Mc - Pc) > C * (I * Di + (1 - I) * Dc)$$

$$(I * Mc - Pc) - ((1 - I) * Mi - Pi) > I * Dc + (1 - I) * Di$$

wherein:

| | |
|---|---|
| I | relative idling time |
| (1 - I) | relative cutting time |
| Mc | electric power median while cutting |
| Pc | observed electric power while cutting |
| Mi | power median while idling |
| Pi | observed electric power while idling |
| Dc | expected electric power deviation while cutting |
| Di | expected electric power deviation while idling |
| N | rotating speed |

Even though present invention has been illustrated and explained in detail above with reference to the preferred embodiments, the invention is not to be construed as limited to the given examples. Variants or alternate combinations of features given in different embodiments may be derived by a subject matter expert without exceeding the scope of present invention.

Independent of the grammatical term usage, individuals with male, female or other gender identities are included within the term.

Reference List

| | |
|---|---|
| 100 | system |
| 105 | cutting machine |
| 110 | printed circuit board PCB |
| 115 | spindle |
| 120 | electric motor |
| 125 | controller |
| 130 | monitoring device |
| 135 | first interface |
| 140 | second interface |
| 145 | processing means |
| GMM1 | first Gaussian Mixture Model |
| GMM2 | second Gaussian Mixture Model |

200    method
205    determine current, RPM
210    skip run up / run down
215    collect data over working cycle
220    collect data in window 1..N
225    GMM1: cutting? idling?
230    estimate idle power, cutting power, speed

240    GMM2: group operating speeds
245    determine cutting and idling powers as well as expected deviations for each speed over all time windows
250    determine anomaly
255    determine remaining spindle lifetime
260    signal
300    data
305    working cycle
310    speed
315    power
320    detail of ramp-up
325    detail of ramp-down
330    section
335    time window

405    first histogram
410    second histogram

**Claims**

1. Method (200) for anomaly detection in a cutting machine (105) with a spindle (115) which is driven by an electric motor (120), the method comprising steps of:

   - determining (205) an electric power consumption of the motor (120) during a working cycle (305) of the machine;
   - dividing the working cycle (305) into time windows (335);
   - for each time window (335), determining (225) wether the spindle (115) was cutting and/or idling on the basis of associated electric power values;
   - determining (245) median and expected deviation of electric power values for cutting and idling operation over the sequence of time windows; and
   - determining (250) an anomaly if electric power values during cutting or idling exceed a predetermined relationship to the corresponding median and expected deviation values.

2. Method (200) according to claim 1, the cutting machine (105) operates after a pattern in which there are times when the spindle (115) is cutting and other times during which the spindle (115) is rotating idly.

3. Method (200) according to claim 1 or 2, wherein the determination whether the spindle (115) was cutting and/or idling during a time window is carried out using a first Gaussian Mixture Model (GMM1).

4. Method (200) according to one of the previous claims, wherein a rotating speed of the spindle (115) is determined (205) along with the electric power values; wherein median and expected deviation of electric power values are determined (245) for matching rotating speeds.

5. Method (200) according to claim 4, wherein different rotating speeds of the spindle (115) are determined using a second Gaussian Mixture Model (GMM2).

6. Method (200) according to one of the previous claims, wherein anomaly determination (250) considers relative frequencies of cutting and idling times of the spindle (115).

7. Method (200) according to one of the above claims, wherein an impending spindle (115) failure is determined (255) on the basis of occurrences of anomalies of the spindle (115).

8. Method (200) according to one of the previous claims, wherein the time windows (335) are of at least similarlength.

9. Method (200) according to one of the previous claims, wherein portions (320, 325) of the working cycle (305) in which the spindle (115) is accelerated from a standstill or decelerated to a standstill are excluded from the time windows (335).

10. Computer program product comprising instructions, the instructions causing an electronic device and/or electronic control system to perform a method (200) according to one of claims 1 to 9 when executed on the electronic device (145) and/or electronic control system (130).

11. Computer readable media on which a computer program product according to claim 10 is stored.

12. Monitoring device (130) for a cutting machine (105) with a spindle (115) which is driven by an electric motor (120), wherein the monitoring device comprises:

- a first interface (135) to the cutting machine (105) for determining electric power consumption of the motor (120);
- a second interface (140) for outputting an indication;
- processing means (145) which are adapted to

- determine electric power consumption of the motor (120) during a working cycle of the machine;
- divide the working cycle into time windows;
- determine, for each time window, wether the spindle (115) was cutting and/or idling on the basis of associated electric power values;
- determine median and expected deviation of electric power values for cutting and idling operation over the sequence of time windows; and
- determine an anomaly if electric power values during cutting or idling exceed a predetermined relationship to the corresponding median and expected deviation values.

13. Device (130) according to claim 12, wherein the indication heralds an impending spindle (115) failure.

14. Device (130) according to one of claims 12 or 13 wherein the cutting machine (105) comprises a depaneling machine.

FIG 1

# FIG 2

FIG 3

EP 4 462 203 A1

FIG 4

| Europäisches Patentamt<br>European Patent Office<br>Office européen des brevets | **EUROPEAN SEARCH REPORT** | **Application Number**<br>EP 23 17 3091 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | EP 0 842 006 B1 (TRI WAY MACHINE LTD [US]) 19 June 2002 (2002-06-19)<br>* paragraphs [0013] - [0017], [0034] - [0048] * | 1,2,4,6, 7,9-11<br>12-14 | INV.<br>G05B19/4065 |
| X<br><br><br><br><br><br><br><br><br><br><br><br>Y<br>A | ZHANG CHAOYANG ET AL: "Edge Computing Enabled Production Anomalies Detection and Energy-Efficient Production Decision Approach for Discrete Manufacturing Workshops",<br>IEEE ACCESS, IEEE, USA,<br>vol. 8, 27 August 2020 (2020-08-27), pages 158197-158207, XP011807947,<br>DOI: 10.1109/ACCESS.2020.3020136<br>[retrieved on 2020-09-04]<br>* First paragraph of section I; Sections III, IV and VI. * | 1,2,8, 10-14<br><br><br><br><br><br><br><br><br><br>3<br>5 | |
| Y<br><br><br><br><br><br><br><br><br><br><br><br><br>A | ZHANG YUNCHAO ET AL: "Idle Duration Prediction for Manufacturing System Using a Gaussian Mixture Model Integrated Neural Network for Energy Efficiency Improvement",<br>IEEE TRANSACTIONS ON AUTOMATION SCIENCE AND ENGINEERING, IEEE SERVICE CENTER, NEW YORK, NY, US,<br>vol. 18, no. 1,<br>17 September 2019 (2019-09-17), pages 47-55, XP011830315,<br>ISSN: 1545-5955, DOI: 10.1109/TASE.2019.2938662<br>[retrieved on 2021-01-06]<br>* Sections 1,3 * | 3<br><br><br><br><br><br><br><br><br><br><br><br>5 | **TECHNICAL FIELDS SEARCHED (IPC)**<br><br>B25J<br>G05B |

-/--

The present search report has been drawn up for all claims

| Place of search | Date of completion of the search | Examiner |
|---|---|---|
| The Hague | 13 October 2023 | Prokopiou, Platon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 23 17 3091

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI W D ET AL: "Intelligent Immune System for Sustainable Manufacturing", 2018 IEEE 22ND INTERNATIONAL CONFERENCE ON COMPUTER SUPPORTED COOPERATIVE WORK IN DESIGN ((CSCWD)), IEEE, 9 May 2018 (2018-05-09), pages 190-195, XP033400653, DOI: 10.1109/CSCWD.2018.8465214 [retrieved on 2018-09-13] * Sections II-IV * | 1,2,4,8, 10-14 | |

TECHNICAL FIELDS
SEARCHED       (IPC)

The present search report has been drawn up for all claims

| Place of search | Date of completion of the search | Examiner |
|---|---|---|
| The Hague | 13 October 2023 | Prokopiou, Platon |

EPO FORM 1503 03.82 (P04C01)

## ANNEX TO THE EUROPEAN SEARCH REPORT
## ON EUROPEAN PATENT APPLICATION NO.

EP 23 17 3091

This annex lists the patent family members relating to the patent documents cited in the above-mentioned European search report.
The members are as contained in the European Patent Office EDP file on
The European Patent Office is in no way liable for these particulars which are merely given for the purpose of information.

13-10-2023

| Patent document cited in search report | | Publication date | Patent family member(s) | | Publication date |
|---|---|---|---|---|---|
| EP 0842006 | B1 | 19-06-2002 | AU | 5024496 A | 05-03-1997 |
| | | | EP | 0842006 A1 | 20-05-1998 |
| | | | WO | 9705982 A1 | 20-02-1997 |

EPO FORM P0459

For more details about this annex : see Official Journal of the European Patent Office, No. 12/82